Europäisches Patentamt

European Patent Office

Office européen des brevets

(19)

(11) EP 0 623 811 B1

(12) EUROPEAN PATENT SPECIFICATION

(45) Date of publication and mention
of the grant of the patent:
07.01.1998 Bulletin 1998/02

(51) Int Cl.6: G01J 5/00

(21) Application number: 94106880.1

(22) Date of filing: 03.05.1994

(54) **Method of contactless measuring the surface temperature and/or emissivity of objects**

Verfahren zum kontaktlosen Messen der Oberflächentemperatur oder des Emissionsvermögens von Objekten

Méthode de mesure sans contact la température de la surface ou le pouvoir émissif des objets

(84) Designated Contracting States:
DE FR GB PT

(30) Priority: 03.05.1993 CZ 79993

(43) Date of publication of application:
09.11.1994 Bulletin 1994/45

(73) Proprietor: UNIVERSIDADE DO MINHO
PT-4719 Braga Codex (PT)

(72) Inventors:
• Hes, Lubos, Doc. Ing. DrSc.
Liberec (CZ)

• Couto, Carlos, MSc, PhD
PT-4700 Braga (PT)

(74) Representative: Petschner, Goetz
Patentanwaltsbüro G. Petschner
Wannenstrasse 16
8800 Thalwil (CH)

(56) References cited:
EP-A- 0 337 724          DE-A- 3 806 173
DE-A- 4 135 112

## Description

## Field of invention

The invention deals with contactless measuring the surface temperature and/or the emissivity of objects based on scanning the infrared radiation emitted by an object being measured by means of at least two detectors of infrared radiation.

## Background of the invention

Contactless measuring the temperature of, especially, moving objects is a frequent requirement, for example, of many processes in the textile, paper and pulp, and plastic industries. Without solving this problem it is impossible to control, regulate and optimize many of these processes. Contactless convention thermometers or radiation thermometers are often used for this purpose.

The former of these thermometers are cheaper, however, they must be installed in the close vicinity of the object being measured, which is not always possible.

Radiation thermometers, i.e. pyrometers, based on scanning the infrared radiation coming out of the object are substantially dependent on the emissive properties, i.e. on the radiation ability or the degree of the measured object blackness. In addition, the error in measurement is increased by the absorption of infrared radiation in the space between the measured object and the pyrometer containing an infrared radiation detector.

The error in measurement caused either by ignorance or the variability of object emissivity and infrared radiation absorption is decreased with the application of so-called two-band or multiband pyrometers. With these devices the infrared radiation coming out of the object is divided into bands of different wavelengths by means of optical filters.

At the same time, the detectors which are maintained at identical temperatures are scanning the radiation only in the selected bands. In this way, a set of independent signals is being created which makes it possible, under certain conditions, to eliminate the influence of the emissivity of the measured object in the resulting relation for the calculation of the measured object temperature.

The main prerequisites of this application are the independence of the emissivity of the measured object on its temperature, or the coincidental increase of the object spectral emissivity with temperature which belong to the given conditions. Similarly, the absorption of infrared radiation in the atmosphere must also be identical in all measured bands of the infrared spectrum.

In practice, these requirements are almost incapable of being fulfilled at lower measured temperatures. Therefore, the band pyrometers are exclusively applied at higher temperatures. However, even in this case there is a number of problems which arise, for example, spectrally dependant oxidation of metals, and which the authors of multiband pyrometry methods try to solve with the application of up to six channels.

Since the price of one infrared band filter, based on the application of as many as ten thin semiconducting layers is, however, higher than the price of a complete pyrometer without the filter, it is without any doubt that even a two-band pyrometer being fitted with these filters is as many as three times more expensive than a common pyrometer.

Therefore other methods are currently used which enables the determination of the emissivity of the measured object in a different way. The latest among these methods involves the application of laser radiation which, after being reflected from the object, is compared with the original one, and thus a datum being appropriate to the object emissivity is obtained. This method, however, is also substantially critical in respect of cost. The equipment is of reasonable size, and requires a complicated installation as well as qualified attendance. Therefore, none of the given methods has been utilized practically yet, nor has been successful from the commercial point of view.

## Summary of the invention

The disadvantages of the present procedures of contactless measuring the surface temperature of objects utilizing the principle of scanning the infrared radiation coming out of the object being measured by means of, at least, two infrared radiation detectors are eliminated by the method applied in this invention, the principle of which consists in the fact that at least two infrared radiation detectors are maintained at different mean temperatures by means of heat supply, which provides for obtaining different and independent output signals of these detectors for the determination of the surface temperature and/or the emissivity of the object being measured.

Especially, the range of measured temperatures from 0° to 250° C, which corresponds to the more used technologies of processing textiles, paper and plastics, is advantageous, provided that the difference of mean temperatures of the infrared radiation detectors is sufficiently big, for example 30° C.

The term "mean temperature" is introduced here for the reason that each detector is becoming heated to some degree by the infrared radiation impinging on it. Its temperature, therefore, increases in the order of tenths degrees centigrade. This small temperature increase, however, depends on the level of impinging radiation flow, which means that the detector temperature fluctuates.

The mean temperature of the detector is then to be understood as a sum of basic detector temperatures unaffected by impinging infrared radiation, averaged with the increase or decrease in detector temperature (for the selected period of time) caused by the exchange of infrared radiation between the object being measured and the detector.

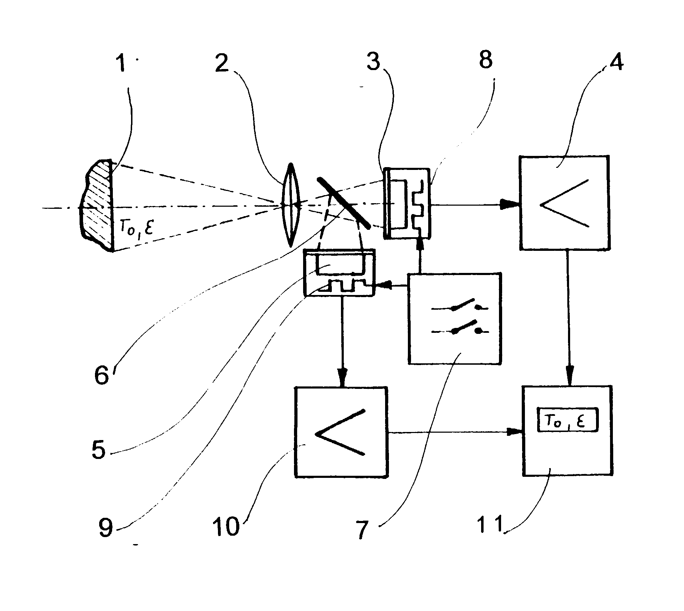

## Brief description of the drawing

The design of the device for carrying out the method of contactless measuring the surface temperature and/or the emissivity of objects according to the invention is schematically shown in the drawing in order to clarify this method.

## Examples of the embodiments of the invention

The infrared radiation being emitted by the measured object **1** is concentrated by means of the lens **2** on the first infrared radiation detector **3** having the mean temperature $T_1$. The output of this said first infrared radiation detector **3** is connected to the first amplifier **4** which can also possess other functions. The amplified signal $U_1$ of the said infrared radiation detector **3** is available on the output of the mostly linear first amplifier **4**. The infrared radiation is conducted to the second infrared radiation detector **5** having the mean temperature $T_2$, either continually by means of the semi-permeable mirror **6** which is positioned between the said lens **2** and the said first infrared radiation detector **3**, see the illustration, or discontinuously by means of the movement of the rotary hood (chopper) reflecting in its one limit position all the radiation concentrated by the said lens **2** on the said second infrared radiation detector **5**, and in its other position transmitting the said radiation to the said first infrared radiation detector **3**. The output of the said second infrared radiation detector **5** is connected to the second amplifier **10**. The amplified signal $U_2$ of the said second infrared radiation detector **5** is available on the output of the said second amplifier **10**.

Since the said infrared radiation detectors **3** and **5** are maintained on different mean temperatures by means of the regulator **7** and the heating/cooling devices **8**, **9**, placed in the vicinity of the said detectors **3**, **5**, two different and independent signals are obtained on the said amplifiers **4** and **10**, and the said signals are fed to the computer **11**, to which the said amplifiers are connected. In the said computer **11** both signals, being different, for example, in their amplitudes, are inserted into the final relation which allows the determination of the resulting object temperature **T** independently of the object emissivity, and of the infrared radiation absoption in the athmosphere between the said object **1** and the said lens **2** of the pyrometer.

The method of contactless measuring the surface temperatutre and/or the emissivity of objects is then carried out so that the said mean temperature $T_1$ of the first infrared radiation detector **3** is maintained by means of the said heating/cooling device **8** and the said regulator **4** on a different higher level than the said mean temperature $T_2$ of the said second infrared radiation detector **5**, which is maintained by means of the said heating/cooling device **9** and the said regulator **10**. Another example of the execution may utilize two temperature regulators, each for the respective detectors **3**, **5**, or the said heating/cooling devices **8**, **9** may be adjusted by means of another known way for heating and cooling, respectively, the said infrared detectors **3**, **5**.

Due to the difference of said temperatures $T_1$, $T_2$, two substantially different and independent output signals are generated on the said infrared radiation detectors **3**, **5**, making it possible to calculate the temperature as well as the object emissivity, and thus also the elimination of the influence of object emissivity and absorption of the infrared radiation of the object.

The disadvantages of the existing methods of the contactless measurement of surface temperature using the principle of the infrared rays reception by means of at least two detectors of infrared rays are thus eliminated by a new method according to the new invention, whose principle depends on the fact that the medium temperatures of these detectors are, by means of at least one heater/cooler and one regulator, kept at different levels, this difference being so high as to generate at least two sufficiently distinguished and independent output signals from these detectors, making possible the calculation of the object emissivity and temperature, thus excluding the influence of the emissivity of the object and absorption of the infrared rays in the space between the object and the detector from the resulting equation for the object temperature determination.

The method is based on the fact that the output signal $U_1$ of each (here: of the first) detector is, according to the Stephan - Boltzmann law, proportional to the difference of the fourth powers of the absolute temperature $T_o$ of the object and $T_1$ of the detector (the real conditions sometimes reduce these powers), as follows:

$$U_1 = C(T_0{}^4 - T_1{}^4)$$

The constant **C** here involves the surface radiation capacity, i.e. emissivity of the object, absorption capacity of the detector, geometrical arrangement of the object and the pyrometer (detector), optical aspects, radiation absorption in the space between the object and pyrometer, and also the electrical amplification of the instrument. It can be taken as advantage, if the the output signals of the both detectors are spectrally independent, it means that their output signals depend on the scanned radiation heat flux only. This condition is fulfilled with the so called thermal detectors whose emissivity is constant in the whole range of the scanned infrared wavelengths.

For the same spectral band of the received infrared radiation, we can write another equation for the other (second) detector:

$$U_2 = C(T_0{}^4 - T_2{}^4)$$

which differs from the Eq. (1) by the different temperature $T_2$ of the other (second) detector.

Solving both equations, we obtain:

$$T_0 = \sqrt[4]{\frac{U_1 T_2{}^4 - U_2 T_1{}^4}{U_1 - U_2}}$$

As expected, the dependence of the object surface temperature on any parameter which could influence the measured temperature precision, disappeared from this equation.

From the construction point of view, it seems advantageous to keep both $T_1$, $T_2$ temperatures close to each other, but this solution, on the other hand, reduces the possibility of distinguishing the individual signals, and increases the negative influence of the electrical (thermal) noise of the precision of the resulting object temperature determination.

If all limit values to the appropriate temperatures, and the $U$ signals corresponding to them, are inserted in the equation (3), then, knowing approximately the value $C$ (evaluated theoretically), it is simple to determine the minimum required temperature difference $T_1 - T_2$ which is necessary for reaching the required accuracy of measurement. For the medium temperature range up to 250° C which corresponds to the most common technologies of processing textiles, paper and plastics, the recommended minimum temperature difference is 30° C.

Independent signals $U_1$, $U_2$ out of both said detectors $\underline{3}$, $\underline{5}$ then may appear, for example, simultaneously, or may alternate depending on the type of device construction for carrying out the method according to the invention. Then the desired object temperature $T_o$ may be advantageously calculated by the microcomputer which is built-in in the pyrometer, in principle, according to the relation (3) which, however, may be modified based on the calibration curve.

### Field of application

The method of contactless measuring according to the invention is advantageously applicable for the contactless measurements of low and medium object temperatures, mainly in the textile, paper and pulp, and plastic industries, and also for the temperatures corresponding to the heat treatment of non-ferrous metals, etc.

The main advantage consists in the possibility of accurate measuring the temperature of objects, in the case when the object emissivity is being changed in the course of their heat treatment, or when the determination is difficult, such as when measuring the temperature of moving objects.

The method according to the invention is even applicable to measure the object emissivity in the above given cases.

### Claims

1. A method of contactless measuring the surface temperature and/or the emissivity of objects on the principle of scanning the infrared radiation emitted by an object being measured by means of at least two infrared radiation detectors, characterized in that said radiation detectors (3,5) are kept, at least for a short time, at different mean temperatures ($T_1$, $T_2$), so that different and independent output signals ($U_1$, $U_2$) of these detectors are obtained for determining the surface temperature ($T_o$) and/or the emissivity of the measured object (1).

2. The method according to claim 1, characterized in that the difference of the mean temperatures ($T_1$, $T_2$) of the infrared radiation detectors (3,5) is at least 30° C.

**Patentansprüche**

1.  Verfahren zum kontaktlosen Messen der Oberflächentemperatur und/oder des Strahlungsvermögens von Objekten nach dem Prinzip der Zerlegung der durch das zu messende Objekt emittierten infraroten Radiation mit Hilfe von wenigstens zwei Detektoren der infraroten Radiation,
    dadurch gekennzeichnet, daß
    die genannten Detektoren (3,5) für wenigstens eine kurze Zeit auf unterschiedlichen Durchschnittstemperaturen ($T_1$, $T_2$) gehalten werden, so daß von diesen Detektoren unterschiedliche und unabhängige Ausgangssignale ($U_1$, $U_2$) zur Ermittlung der Oberflächentemperatur ($T_o$) und/oder des Strahlungsvermögens des zu messenden Objekts (1) gewonnen werden.

2.  Verfahren nach Anspruch 1, dadurch gekennzeichnet, daß die Differenz der Durchschnittstemperaturen ($T_1$, $T_2$) der Detektoren (3, 5) der infraroten Radiation wenigstens 30°C beträgt.

**Revendications**

1.  Méthode de mesure sans les contacts de la température de la surface et/ou de l'émissivité d'objets suivant le principe de la décomposition de la radiation infrarouge émise par un objet mesuré au moyen de deux au moins détecteurs de radiation infrarouge,
    caractérisée en ce que
    lesdits détecteurs (3, 5) de la radiation infrarouge sont maintenus, pour une courte période de temps au moins, à des températures moyennes différentes ($T_1$, $T_2$) ainsi produisant des signaux de sortie ($U_1$, $U_2$) différents et indépendants pour déterminer la température de la surface ($T_o$) et/ou l'émissivité de l'objet mesuré.

2.  Méthode suivant la revendication 1, caractérisée en ce que la différence entre les températures moyennes ($T_1$, $T_2$) des détecteurs (3, 5) de la radiation infrarouge est de 30°C au moins.